# EUROPEAN PATENT APPLICATION

(11) **EP 4 670 888 A1**
(43) Date of publication of application: **31.12.2025**
(21) Application number: 25183529.4
(22) Date of filing: 18.06.2025
(51) Int. Cl.: B23D 65/00, B28D 1/04, B28D 1/12, B33Y 80/00

(54) **SEGMENT FOR DIAMOND TOOL AND METHOD OF MANUFACTURING THE SAME**

(30) Priority: 24.06.2024 KR 20240081996
(71) Applicant: SHINHAN DIAMOND INDUSTRIAL CO., LTD., Incheon 21635 (KR)
(72) Inventor: KIM, Shin Kyung, 06009 Seoul (KR); KIM, Sung Gyu, 22003 Incheon (KR)
(74) Representative: AWA Sweden AB

(57) **Abstract**

A segment for a diamond tool according to the present invention includes a segment manufactured by sintering or hot-pressing a mixture formed by mixing diamond grains and a first powder, and an auxiliary stone part printed on the segment by 3D printing by which the diamond grains and second powder are melted and laminated with a laser.

## Description

### BACKGROUND

### 1. Field of the Invention

The present invention relates to a segment for a diamond tool and a method of manufacturing the same, and more particularly, to a segment for a diamond tool capable of obtaining good initial cutting force even without performing a dressing process to expose diamond grains through a surface of the segment manufactured by sintering or hot pressing, and a method of manufacturing the same.

### 2. Discussion of Related Art

A diamond tool is often used to cut a workpiece or polish a surface of the workpiece. The diamond tool includes a shank that is a portion coupled to a working machine and a cutting tip that is disposed at a tip of the shank and of which diamond grains cut or polish the workpiece.

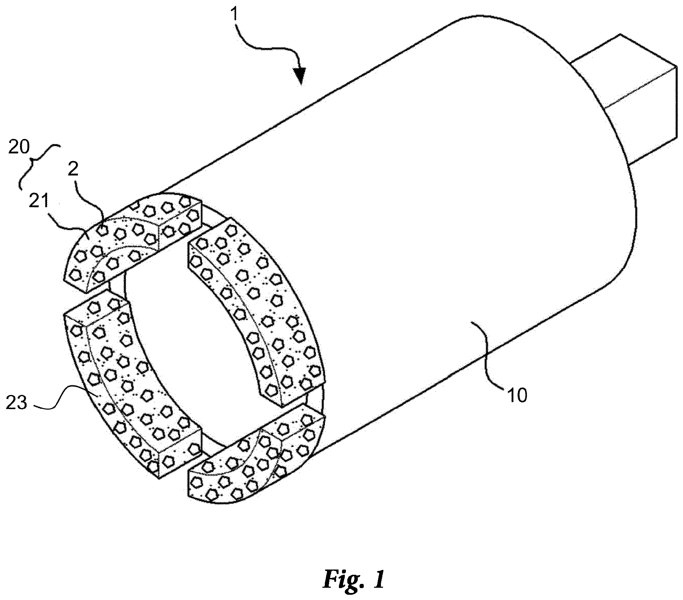

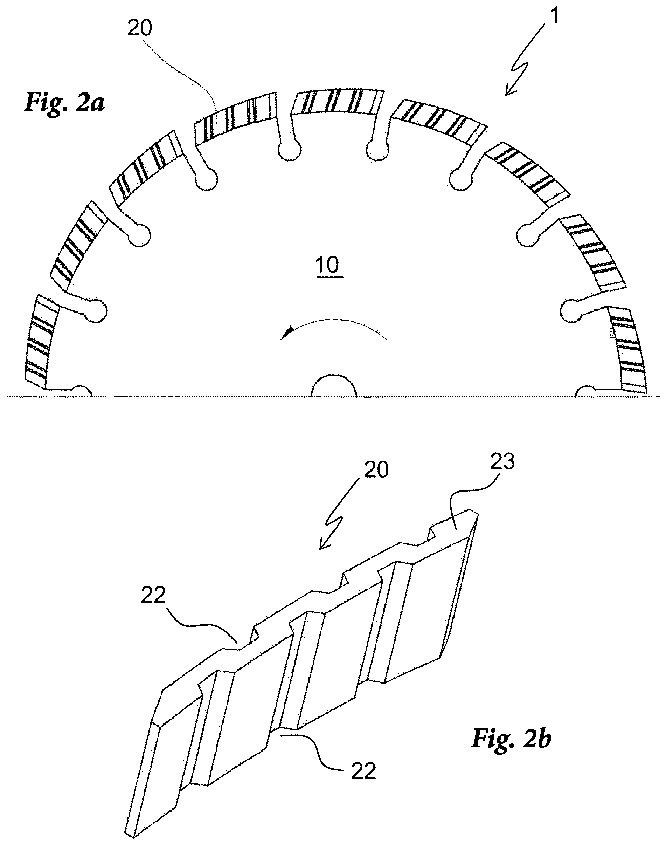

The shank corresponding to a tool body is mainly made of a metal, a shank of a drilling tool is formed in a cylindrical shape as shown in FIG. 1, and a shank of a cutting or polishing tool is formed in a disk shape as shown in FIG. 2.

Examples of the cutting tip include a form in which diamond grains and separate powder are mixed with each other to attach a sintered or hot-pressed segment to the shank and a form in which the diamond grains are fused or electrodeposited to the tip of the shank.

The diamond grains usually used in the diamond tool include one or more polishing particles such as natural or artificial diamonds, cubic boron nitride (CBN), an alumina oxide (Al₂O₃), a silicon carbide (SiC), and a titanium carbide (TiC).

The shank and the segment are coupled to each other by laser welding, brazing, diffusion bonding, or the like.

In the segment manufactured in a mold by sintering or hot pressing, the diamond grains do not protrude sharply from the surface of the segment and thus cannot perform initial cutting smoothly. For this reason, a dressing process for allowing the diamond grains to protrude from the surface is essential.

In the dressing process, a portion of a binding material of the segment is removed by methods such as grinding, laser ablation, and electrolysis, and this dressing process has a problem in that time and cost loss are large.

According to Korean Patent Registration No. 10-0950256, the present applicant has disclosed a segment manufacturing method that allows initial cutting to be performed smoothly without the need for a dressing process by fusing diamond grains on a surface of a sintered segment.

In order to form a new auxiliary stone part on a surface of a segment by the conventional segment manufacturing method of the present applicant, a paste mixed with a lead material and diamond grains is applied to the surface of the segment and is dried, and the lead material is melted and fused by a non-metal heating element, a high-frequency induction coil, or an electric furnace. According to the conventional segment manufacturing method, the shank may be thermally deformed due to high heat in a fusing process, and a size of the diamond tool that may be processed is limited due to a size of the electric furnace. Even when electrodeposition is used instead of fusion, the diamond tool should be masked, first plated, and then electroplated in a plating tank, and thus a process is very complicated, and the diamond grains are easily removed.

### [Related Art Documents]

### [Patent Documents]

(Patent Document 1) KR 10-2014-0003751 A1, Jan 10, 2014, FIG. 1B
(Patent Document 2) KR 10-0950256 B, Mar 31, 2010, FIG. 5

### SUMMARY OF THE INVENTION

The present invention is directed to providing a segment in which, by omitting a dressing process for the segment manufactured by sintering or hot pressing, a manufacturing process may be simplified, diamond grains may be maintained well, and thermal deformation of a shank may be reduced, and a method of manufacturing the same.

A segment for a diamond tool includes a segment manufactured by sintering or hot-pressing a mixture formed by mixing diamond grains and a first powder, and an auxiliary stone part printed on the segment by 3D printing by which the diamond grains and a second powder are melted and laminated with a laser.

A portion or an entirety of the auxiliary stone part may be exposed through a main cutting surface of the segment.

The auxiliary stone part may be provided as a plurality of auxiliary stone parts which are formed on a surface of the segment at a regular interval.

One or more concave portions are formed in the segment, and the auxiliary stone part may be formed to completely or partially fill all or some of the concave portions.

The concave portion may be formed in one or more cutting surfaces of the segment that come into contact with a workpiece.

A ceramic powder, a Cu-based alloy powder, a Ni-based alloy powder, an Sn-based alloy powder, or a mixture of one or more thereof may be used as the second powder.

A size of the diamond grain supplied to the auxiliary stone part may be in a range of 75 µm to 750 µm.

A method of manufacturing a segment for a diamond tool includes manufacturing a segment formed by sintering or hot-pressing a mixture formed by mixing diamond grains and a first powder and printing an auxiliary stone part by 3D printing by which the diamond grains and second powder are melted with a laser and laminated on a surface of the segment.

The 3D printing may be performed while the segment or the laser moves at a moving speed of 500 mm/min to 2,000 mm/min and the laser having power of 200 Watt to 2,000 Watt is radiated.

A supply rate of the diamond grains supplied to form the auxiliary stone part may be in a range of 0.005 g/sec to 0.5 g/sec, and a supply rate of the second powder may be in a range of 0.05 g/sec to 0.5 g/sec.

### BRIEF DESCRIPTION OF THE DRAWINGS

The above matters and other objects, features, and advantages of the present disclosure will become more apparent to those of ordinary skill in the art by describing exemplary embodiments thereof in detail with reference to the accompanying drawings, in which:
FIGS. 1 and 2 are views illustrating a conventional diamond tool to which a segment is attached;
FIG. 3 is a view illustrating a conventional segment;
FIGS. 4 and 5 are views illustrating an auxiliary stone part formed in the segment of FIG. 3 according to embodiments;
FIGS. 6 to 8 are views illustrating the auxiliary stone part formed in the segment of FIG. 2B according to embodiments; and
FIG. 9 is a picture of a usage state of a segment according to an embodiment of the present invention.

### DETAILED DESCRIPTION OF EXEMPLARY EMBODIMENTS

Hereinafter, the present invention will be described in more detail with reference to the accompanying drawings according to embodiments.

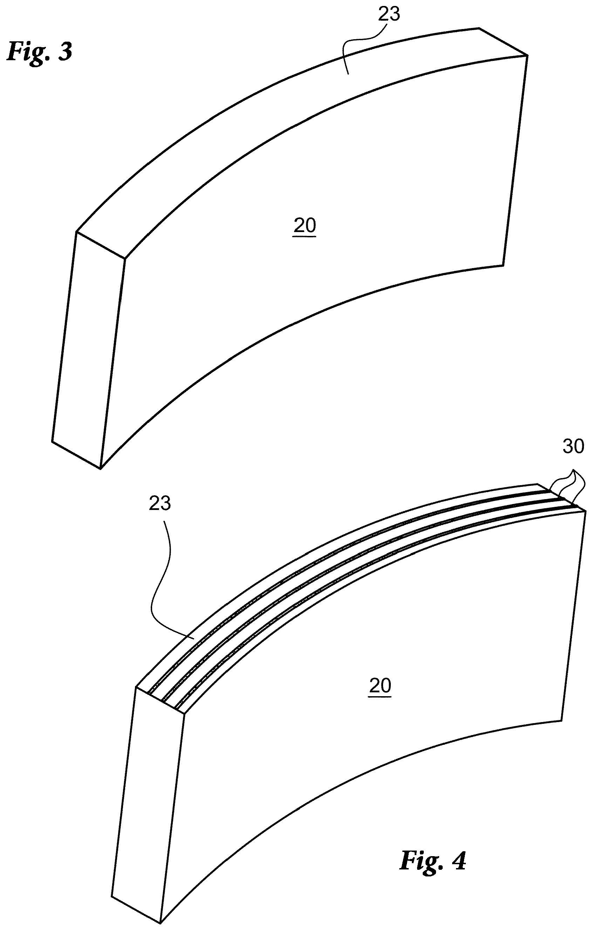

FIG. 3 is a view illustrating a conventional segment 20 attached to a drilling diamond tool of FIG. 1, and FIGS. 4 and 5 are views illustrating an auxiliary stone part 30 formed in the segment 20 of FIG. 3 according to embodiments.

The segment 20 attached to a tip or circumference of a shank comes into contact with a workpiece according to rotation of the shank to polish or cut the workpiece. Among surfaces forming the segment, a surface that directly polishes or cuts the workpiece will be referred to as a "main cutting surface 23."

The segment in the present invention is manufactured by mixing and then sintering or hot pressing diamond grains and a first powder.

The first powder may be any powder as long as the powder is used for sintering or hot pressing and may be selected from the group consisting of a powder, a ceramic powder, a glassy powder, or a mixture thereof.

As described above, in the sintering or hot pressing, a mixture of the diamond grains and the first powder is pressed/heated in a mold, and thus the diamond grains on a surface are not exposed sufficiently to allow cutting or polishing.

Thus, in the present embodiment, the auxiliary stone part 30 is separately formed to improve an initial cutting force of the segment manufactured by the sintering or hot pressing.

The auxiliary stone part 30 is formed through printing on a segment surface in a form in which the diamond grains and the second powder are melted and laminated with a laser by 3D printing.

**In** the present embodiment, a size of the diamond grain supplied to form the auxiliary stone part is in a range of 75 µm to 750 µm, and nickel is used as the second powder.

A ceramic powder, a Cu-based alloy powder, an Ni-based alloy powder, an Sn-based alloy powder, or a mixture of one or more thereof may be used as the second powder.

The Cu-based alloy powder, the Ni-based alloy powder, and the Sn-based alloy powder include powders made of only Cu, Ni, and Sn, respectively.

Any one of a CO₂ laser device, an Nd-YAG laser device, a fiber laser device, a diode laser device, and a disk laser device that emit a laser having a wavelength capable of passing through the diamond grains may be used as a laser device used for the 3D printing.

In the 3D printing, a laser having power of 200 Watt to 2,000 Watt is radiated and moved at a moving speed of 500 mm/min to 2,000 mm/min. The laser light is moved by moving a laser output unit or moving the segment. A pitch of the laser is suitable for a range of about 0.1 mm to 2.0 mm. Since the diamond is vulnerable to heat, it is necessary to adjust an output of the laser device so that a temperature of a molten pool in which the second powder is melted does not deviate from a preset temperature and does not damage the diamond grains.

It is preferable that a supply rate of the diamond grains supplied to form the auxiliary stone part is in a range of 0.005 g/sec to 0.5 g/sec, and a supply rate of the second powder is in a range of 0.05 g/sec to 0.5 g/sec. The diamond grains of the auxiliary stone part formed by the 3D printing are exposed through the surface to cut or polish the workpiece.

The segments according to the present invention have the auxiliary stone parts formed on or exposed through surfaces corresponding to the main cutting surfaces.

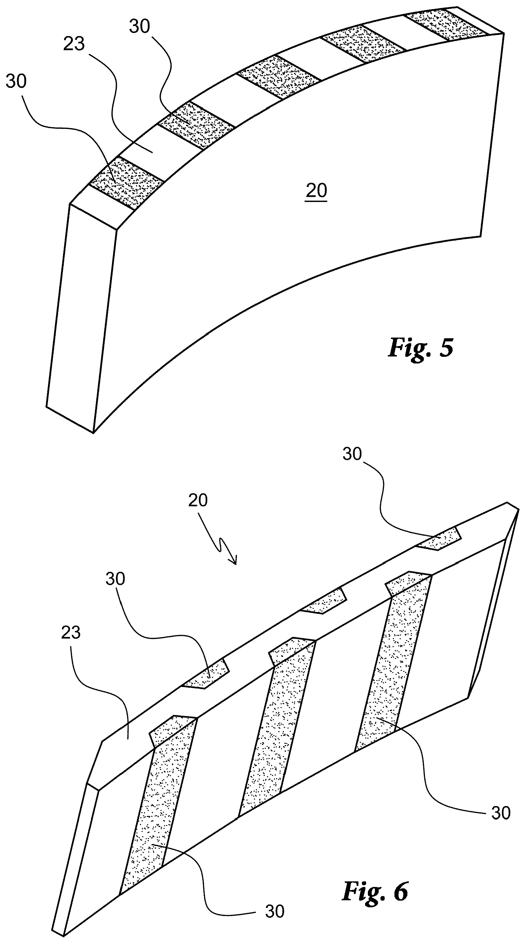

The auxiliary stone part of FIG. 4 is printed with a plurality of auxiliary stone parts spaced apart from each other in a segment movement direction, and the auxiliary stone part of FIG. 5 is printed with a plurality of auxiliary stone parts spaced apart from each other in a direction perpendicular to the segment movement direction.

When the diamond tool equipped with the segment cuts or polishes the workpiece, the auxiliary stone part formed on the main cutting surface of the segment first comes into contact with the workpiece, the exposed diamond grains of the auxiliary stone part cut or polish the workpiece, the diamond grains and/or binding materials of the auxiliary stone part broken or separated in a cutting or polishing process remove a binding material of the segment, and thus the diamond grains of the segment are exposed through the surface.

FIGS. 6 to 8 are views illustrating the auxiliary stone part formed in the segment of FIG. 2B according to embodiments.

FIG. 2B illustrates a cutting diamond tool in which a concave portion 22 is formed along a side surface of the segment 20. Usually, the concave portion 22 is formed to discharge a segment.

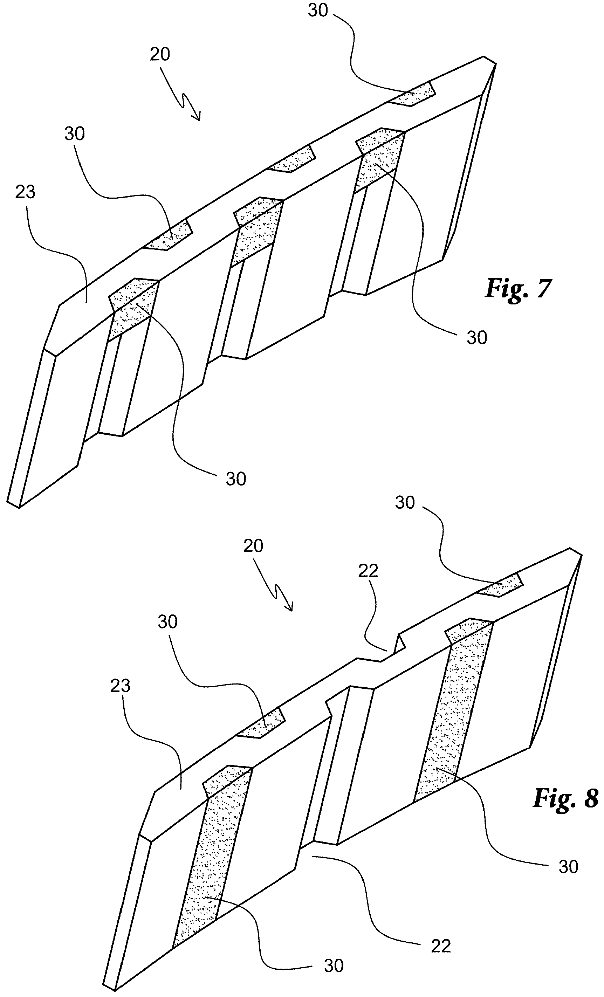

In the present embodiment, the auxiliary stone part 30 is formed in the concave portion by 3D printing. FIG. 6 illustrates a form completely filled with the auxiliary stone part, and FIGS. 7 and 8 illustrate a form in which a portion of the concave portion is filled with the auxiliary stone part. The auxiliary stone parts of FIGS. 6 to 8 are all exposed through the main cutting surface, thereby ensuring an initial cutting force.

In the present embodiment, the concave portion provided in the segment is used to discharge the segment, but a separate concave portion for 3D printing may also be formed. Although not illustrated, the concave portion may also be formed in the main cutting surface.

When the auxiliary stone part is formed using the concave portion, a coupling force between the segment and the auxiliary stone part may be further enhanced.

It is preferable that the diamond grains and the second powder be supplied through separate nozzles while performing 3D printing, but the diamond grains and the second powder may be supplied in a mixed form through one nozzle.

When the diamond grains and the second powder are supplied through the separate nozzles, 3D printing may be performed such that a deep portion of the concave portion is filled with only the second powder, and the diamond grains and the second powder are supplied to an upper end (i.e., a portion adjacent to the main cutting surface) of the concave portion.

Table 1 is obtained by measuring a hardness HRB of the auxiliary stone part, and it can be identified that upon consideration that the hardness of the sintered segment is in a range of 60 HRB to 150 HRB, the auxiliary stone part according to the present invention has a sufficient hardness to cut the binding material of the segment.

**[Table 1]**

| | 1 | 2 | 3 | 4 | 5 | Average |
|---|---|---|---|---|---|---|
| Hardness (HRB) | 91 | 93 | 89 | 92 | 94 | 91.8 |

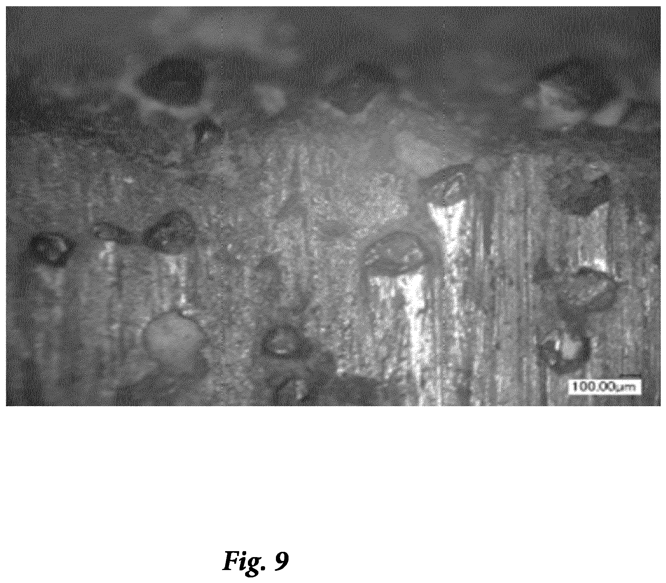

FIG. 9 is a picture of a surface of the segment after drilling the workpiece 20 times using the drilling diamond tool having the segment of the present invention, and it can be identified that the auxiliary stone part has a normal wear state and does not peel off.

Accordingly, the segment of the present invention may easily form the auxiliary stone part in a desired shape at a desired location by 3D printing, thereby ensuring an excellent initial cutting force without performing a dressing process.

According to the present invention, by omitting a dressing process, time/cost benefits can be obtained during manufacturing, formation of an auxiliary stone part can be automated, an initial cutting load and heat generation of a diamond tool can be reduced, a processing time of a workpiece can be shortened, and thus a good cutting capability can be obtained.

## Claims

1. A segment for a diamond tool, the segment comprising:
a segment manufactured by sintering or hot-pressing a mixture formed by mixing diamond grains and a first powder; and
an auxiliary stone part printed on the segment by 3D printing by which the diamond grains and a second powder are melted and laminated with a laser.

2. The segment of claim 1, wherein a portion or an entirety of the auxiliary stone part is exposed through a main cutting surface of the segment.

3. The segment of claim 1, wherein the auxiliary stone part is provided as a plurality of auxiliary stone parts which are formed on a surface of the segment at a regular interval.

4. The segment of claim 1, wherein one or more concave portions are formed in the segment, and the auxiliary stone part is formed to completely or partially fill all or some of the concave portions.

5. The segment of claim 4, wherein the concave portion is formed in one or more cutting surfaces of the segment that come into contact with a workpiece.

6. The segment of claim 1, wherein a ceramic powder, a Cu-based alloy powder, a Ni-based alloy powder, an Sn-based alloy powder, or a mixture of one or more thereof is used as the second powder.

7. The segment of claim 1, wherein a size of the diamond grain supplied to the auxiliary stone part is in a range of 75 µm to 750 µm.

8. A method of manufacturing a segment for a diamond tool, the method comprising:
manufacturing a segment formed by sintering or hot-pressing a mixture formed by mixing diamond grains and a first powder; and
printing an auxiliary stone part by 3D printing by which the diamond grains and a second powder are melted with a laser and laminated on a surface of the segment.

9. The method of claim 8, wherein the 3D printing is performed while the segment or the laser moves at a moving speed of 500 mm/min to 2,000 mm/min and the laser having power of 200 Watt to 2,000 Watt is radiated.

10. The method of claim 8, wherein a supply rate of the diamond grains supplied to form the auxiliary stone part is in a range of 0.005 g/sec to 0.5 g/sec, and a supply rate of the second powder is in a range of 0.05 g/sec to 0.5 g/sec.
